# EUROPEAN PATENT SPECIFICATION

(11) **EP 4 532 922 B1**
(45) Date of publication and mention of the grant of the patent: **25.03.2026**
(21) Application number: 23754872.2
(22) Date of filing: 01.08.2023
(51) Int. Cl.: F03B 13/18

(54) **WAVE ENERGY CONVERTER**
WELLENENERGIEWANDLER
CONVERTISSEUR D'ÉNERGIE HOULOMOTRICE

(30) Priority: 11.07.2023 ME P202385
(43) Date of publication of application: 09.04.2025
(73) Proprietor: VULJAJ, Sokolj, 81206 Tuzi (ME)
(72) Inventor: VULJAJ, Sokolj, 81206 Tuzi (ME)
(74) Representative: Vossius & Partner Patentanwälte Rechtsanwälte mbB
(86) International application number: PCT/IB2023/057797
(87) International publication number: WO 2025/012692

(56) References cited:
- WO-A1-2006/079812
- WO-A1-2006/108421
- WO-A1-2014/056049
- CN-A- 104 329 212

## Description

### Field to which the invention relates

The invention in a broader sense belongs to the field of energy, and specifically refers to a wave energy converter. (IPC F03B13/14)

CN 104 329 212 A discloses a float type hydraulic wave energy device comprising a power generation cabin, floats, vertical columns, a connecting rod, a rotary shaft and a hydraulic power generation device. The float type wave energy device is arranged on an undersea foundation by the vertical columns, the power generation cabin is arranged on the vertical columns, and the hydraulic power generation device is arranged in the power generation cabin, and is connected with the float through the external connecting rod.

### Technical problem

Due to the high level of environmental pollution and the need to protect the environment, future sources of electricity production are exclusively ecological. Given that there are still a lot of power plants operating on combustible materials, the need for new ecological sources of energy is inevitable.

### The solution to the problem

The new wave energy converter is efficient and can be used for the production of electricity in all countries of the world that have access to the sea, it also serves as an engine for city water supply pumps, for sewage drainage pumps of all coastal cities, for supplying salt pans with sea water, etc. It is intended to be installed in the sea close to the coast or where the water is not too deep because the space from the bottom to the surface of the water is used. Due to the efficiency of production and assembly, this wave energy converter is constructed as a single element that is connected to several of the same elements and they all work together as a closed system, because 20 or more connected converters work in one system to achieve stable oil pressure pumping multiple hydraulic pistons. The floating weights rise with the waves, and when they descend, they push hydraulic pistons that pump high pressure oil into a hydro motor that turns a generator to produce electricity.

### A brief description of the images

Figure 1 shows the converter in detail.
Figure 2 shows the operation of several connected converters.

### Detailed description of the invention

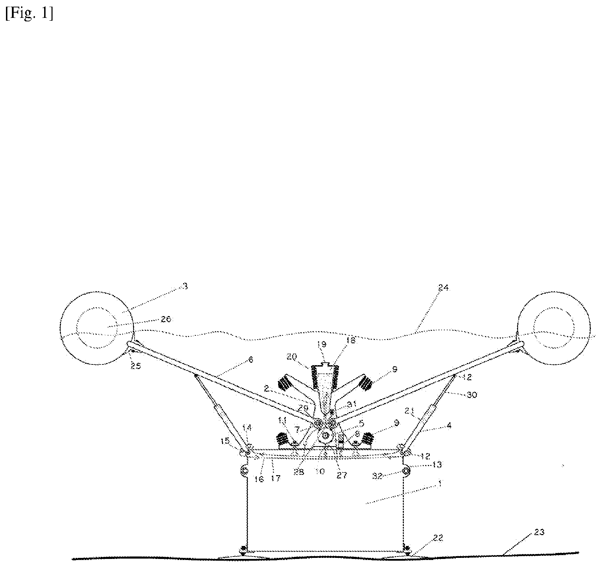

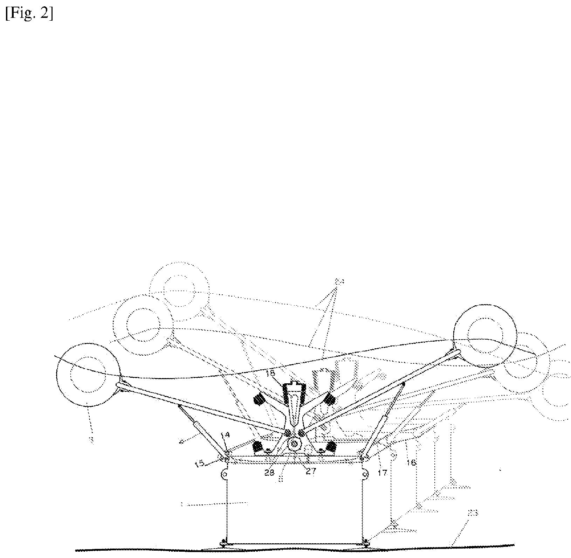

This transducer has a base (1) of concrete construction that has the appropriate weight to stand fixed and stable on the seabed (23) at the appropriate depth for the operation of the floating weights (3) that follow the surface of the water (24) during smaller and larger waves. The base (1) has at least four adjustable legs (22), ears (13) for connecting the converters to each other with screws (32). The converter has two unidirectional hydraulic cylinders (4), two levers (6), two floating weights (3), a hydraulic motor (5), a metal body (2) attached to a number of concrete bolts (11) on a base (1). Body (2) has the upper and lower lever stopper (9), tank (18) for hydraulic oil with finned cooler (20) and cap (19), low pressure switch (10), high pressure safety valve (31) and high-pressure oil stabilizer (8). The levers (6) are fixed on one side to the body of the converter on shafts (29) with bearings (7) allowing the shaft to move up and down with a limited stroke on the lower and the upper lever stopper (9). The levers (6) on the other side are fixed to the carrier (25) of the floating weight. The floating weight (3) has a suitable empty surface (26) so that it can stand most of it above the water and follow the surface of the water (24). The hydraulic cylinders (4) are attached with the piston lever (30) to the hydraulic cylinder mounts (12) which are fixed on the lower part of the lever (6) and the other side with the cylinder housing on the hydraulic cylinder mount (12) on the concrete base (1). The hydraulic cylinders (4) each have one inlet non-return valve (14) and one outlet non-return valve (15). High-pressure lines (16) are attached to the output valves of the hydraulic cylinders, which connect both hydraulic cylinders with the high-pressure oil stabilizer (8) and the hydraulic motor (5) to the inlet coupling (27). The output coupling (28) of the hydraulic motor is connected to the oil tank (18), and the tank with the inlet non-return valve (14) to the hydraulic cylinder (4), Figure 1. The hydraulic motor (5) is connected to the generator for power generation or water pump and so on. Multiple inverters are connected together and function as a single unit. When we connect 10 or more converters, they work in one closed system, so that the outputs of all hydraulic cylinders (4) are connected in the high-pressure hose line (16) to which all the hydraulic motors (5) are connected to the inlet couplings (27) and have the same oil pressure, figure 2. The hydraulic motors have an output coupling (28) which is connected to the tank (18) and all the tanks (18) are connected in the low-pressure line (17) with inlet non-return valve (14) to all hydraulic cylinders (4). The wave energy converter works by the fact that when the floating weights move with the waves up, the hydraulic cylinders open and draw oil from the reservoir and when the weights go down, they push the pistons (21) down with their weight and create a high oil pressure that exits through the outlet check valves of the cylinders in the high pressure line and the inlet of the hydraulic motors, so that the oil from the hydraulic cylinders can only circulate through the hydraulic motors into the tank and again through the inlet check valves into the hydraulic cylinders (4). The high-pressure oil stabilizer (8) is installed in the high-pressure line (16), which has a pressure spring on the piston and as pressure is created in the high-pressure line, it fills and holds the reserve oil to maintain a stable pressure in the hydraulic motors that is needed at the moment when it happens that several pistons are in the charging phase at the same time. Hydraulic motors (5) on the high-pressure line (16) have installed a low-pressure switch (10), which is intended to turn off the hydro motors when the waves decrease and the oil pressure in the system drops. The low-pressure switches (10) are designed for each engine separately to turn it off at a certain pressure drop, arranged up to the last one that does not have a pressure cut-off switch to work even when the sea is calm, so that the last engine is supplied by all the converters with a smaller stroke of the pistons.

### Example1:

One wave energy converter having:
Floating weights of 2.5t each.
Levers for weights 3m long.
Hydraulic cylinders 4.7cm2 x 100cm (volume 2.209ml).
Hydraulic motor volume 22.7 ml, 51 kw maximum power.

The pistons are attached to the base and lever with a stroke of 3/1, so the weight of the weight is tripled in the hydraulic cylinder, so that 7.5t of weight in this cylinder diameter creates a pressure of 336 bar. The waves lift the weight on average 20 times per minute, the average piston stroke 30cm, that's 662.7ml x20 = 13.254ml x 2 pistons = 26.508ml of oil pushes one converter with two pistons into the hydraulic motor in one minute. So, with only one converter with 30 cm stroke of the pistons, we get an average of 26.5 L of oil flow per minute with a maximum pressure of up to 336 bar under load. A hydraulic motor with a volume of 22.7 ml and a maximum power of 51 kW requires 22.7 ml of oil for one revolution. 26,508 ml; 22.7 ml = 1,177.5 revolutions per minute, i.e., on twice the waves the piston opens 60 cm, and we get 2,335 revolutions per minute and on the biggest waves the pistons open 100 cm x 20 times per minute pushing 44.5 L per minute into the engine, i.e. one converter with two pistons 89 L or 3900 revolutions per minute which is almost the maximum flow of this hydraulic motor.

## Claims

1. A wave energy converter comprising
a concrete base (1) with a square shape that has at least four adjustable legs (22) for adjusting according to the terrain so that the base (1) stands flat on the bottom of the seabed (23), and ears (13) for chain fastening the base (1) to another base with screws (32), wherein
on the upper surface of the base (1) there are several concrete bolts (11) embedded in the concrete, attached to them is a body (2) made of stainless steel, which has a tank (18) in the middle, the tank (18) being provided with a cap (19) and with a finned cooler (20), the body (2) being also provided with shafts (29) and bearings (7) where levers (6) are attached, one on the left and the other on the right,
wherein the levers (6) have a vertical stroke, limited by upper and lower lever stoppers (9),
wherein, at respective ends, the levers (6) each have one floating weight (3) which has an external carrier (25) for fastening with the respective lever (6) and inside a suitable empty surface (26) to stand and follow the surface of the water (24),
wherein the levers (6) each have one hydraulic cylinder mount (12) to which one unidirectional hydraulic cylinder (4) with a piston lever (30) is attached,
wherein, at the other side of the respective unidirectional hydraulic cylinders (4) further hydraulic cylinder mounts (12) are attached to the concrete base (1),
wherein the unidirectional hydraulic cylinders (4) each have an input non-return valve (14) and an output non-return valve (15), wherein high-pressure lines (16) are attached to the output non-return valves (15) that connect both hydraulic cylinders with a high-pressure oil stabilizer (8) and with a hydraulic motor (5) via an inlet coupling (27), wherein a low pressure switch (10) is installed, and, while a safety valve (31) connects the high pressure line (16) with the tank (18), also an output coupling (28) of the hydraulic motor is connected to the tank (18), wherein the tank (18) is connected to the inlet non-return valves (14) of the hydraulic cylinders (4) with low-pressure lines (17).

## Patentansprüche

1. Wellenenergiewandler, umfassend
einen Betonsockel (1) mit einer quadratischen Form, der mindestens vier anpassbare Beine (22) zum Anpassen gemäß dem Gelände aufweist, so dass der Sockel (1) flach auf dem Boden des Meeresbodens (23) steht, und Ösen (13) zur Kettenbefestigung des Sockels (1) an einem anderen Sockel mit Schrauben (32) aufweist, wobei
sich auf der Oberseite des Sockels (1) mehrere Betonbolzen (11) befinden, die in den Beton eingelassen sind, an denen ein Körper (2) angebracht ist, der aus Edelstahl gebildet ist, der in der Mitte einen Behälter (18) aufweist, wobei der Behälter (18) mit einer Abdeckung (19) und mit einem Rippenkühler (20) bereitgestellt ist, wobei der Körper (2) auch mit Wellen (29) und Lagern (7) bereitgestellt ist, an denen Hebel (6), einer links und der andere rechts, angebracht sind, wobei die Hebel (6) einen vertikalen Hub aufweisen, der durch obere und untere Hebelanschläge (9) begrenzt ist,
wobei die Hebel (6) an den jeweiligen Enden jeweils ein Schwimmgewicht (3) aufweisen, das einen äußeren Träger (25) zum Befestigen mit dem jeweiligen Hebel (6) und im Inneren eine geeignete leere Fläche (26) aufweist, um auf der Wasseroberfläche (24) zu stehen und dieser zu folgen,
wobei die Hebel (6) jeweils eine Hydraulikzylinderhalterung (12) aufweisen, an der ein unidirektionaler Hydraulikzylinder (4) mit einem Kolbenhebel (30) angebracht ist,
wobei auf der anderen Seite der jeweiligen unidirektionalen Hydraulikzylinder (4) weitere Hydraulikzylinderhalterungen (12) an dem Betonsockel (1) angebracht sind,
wobei die unidirektionalen Hydraulikzylinder (4) jeweils ein Eingangsrückschlagventil (14) und ein Ausgangsrückschlagventil (15) aufweisen, wobei an den Ausgangsrückschlagventilen (15) Hochdruckleitungen (16) angebracht sind, die beide Hydraulikzylinder über eine Eingangskupplung (27) mit einem Hochdruckölstabilisator (8) und mit einem Hydraulikmotor (5) verbinden, wobei ein Niederdruckschalter (10) installiert ist und, während ein Sicherheitsventil (31) die Hochdruckleitung (16) mit dem Behälter (18) verbindet, auch eine Ausgangskupplung (28) des Hydraulikmotors mit dem Behälter (18) verbunden ist, wobei der Behälter (18) mit den Eingangsrückschlagventilen (14) der Hydraulikzylinder (4) über Niederdruckleitungen (17) verbunden ist.

## Revendications

1. Convertisseur d'énergie houlomotrice comprenant
une base de béton (1) avec une forme carrée qui présente au moins quatre pieds réglables (22) permettant un réglage selon le terrain de sorte que la base (1) repose à plat sur le fond marin (23), et des oreilles (13) pour la fixation par chaînes de la base (1) à une autre base avec des vis (32), dans lequel
sur la surface supérieure de la base (1) se trouvent plusieurs boulons de béton (11) incorporés dans le béton, un corps (2) composé d'acier inoxydable est attaché à ceux-ci, qui présente un réservoir (18) au milieu, le réservoir (18) étant doté d'un capuchon (19) et d'un refroidisseur à ailettes (20), le corps (2) étant également doté d'arbres (29) et de paliers (7) où des leviers (6) sont attachés, l'un sur la gauche et l'autre sur la droite,
dans lequel les leviers (6) présentent une course verticale, limitée par des butées de levier supérieure et inférieure (9),
dans lequel, au niveau d'extrémités respectives, les leviers (6) présentent chacun un poids flottant (3) qui présente un support externe (25) pour une fixation avec le levier respectif (6) et à l'intérieur une surface vide appropriée (26) pour reposer et suivre la surface de l'eau (24),
dans lequel les leviers (6) présentent chacun une monture de vérin hydraulique (12) à laquelle un vérin hydraulique unidirectionnel (4) avec un levier de piston (30) est attaché,
dans lequel, au niveau de l'autre côté des vérins hydrauliques unidirectionnels respectifs (4) d'autres montures de vérin hydraulique (12) sont attachées à la base de béton (1),
dans lequel les vérins hydrauliques unidirectionnels (4) présentent chacun un clapet antiretour d'entrée (14) et un clapet antiretour de sortie (15), dans lequel des conduites à haute pression (16) sont attachées aux clapets antiretour de sortie (15) qui relient à la fois des vérins hydrauliques avec un stabilisateur d'huile à haute pression (8) et avec un moteur hydraulique (5) via un accouplement d'entrée (27), dans lequel un commutateur basse pression (10) est installé, et, alors qu'une soupape de sûreté (31) relie la conduite à haute pression (16) au réservoir (18), un accouplement de sortie (28) du moteur hydraulique est également relié au réservoir (18), dans lequel le réservoir (18) est relié aux clapets antiretour d'entrée (14) des vérins hydrauliques (4) avec des conduites à basse pression (17).
